# EUROPÄISCHE PATENTSCHRIFT

(11) **EP 0 967 402 B1**
(45) Veröffentlichungstag und Bekanntmachung des Hinweises auf die Patenterteilung: **19.06.2002**
(21) Anmeldenummer: 99810535.7
(22) Anmeldetag: 17.06.1999
(51) Int. Cl.: F16B 13/14

(54) **Ankerstange für ein Verbundankersystem**
Anchoring bar for compound anchor
Barre d'ancrage pour dispositif d'ancrage composite

(30) Priorität: 23.06.1998 DE 19827829
(43) Veröffentlichungstag der Anmeldung: 29.12.1999
(73) Patentinhaber: HILTI Aktiengesellschaft, 9494 Schaan (LI)
(72) Erfinder: Ludwig, Wolfgang, 86830 Schwabmünchen (DE); Leibhard Erich, 81476 München (DE)
(74) Vertreter: Wildi, Roland

(56) Entgegenhaltungen:
- EP-A- 0 356 425
- EP-A- 0 770 785
- EP-A- 0 856 669
- DE-A- 19 634 912
- US-A- 4 983 083

## Beschreibung

Die Erfindung betrifft eine Ankerstange zur Verankerung in einer mit einer vor-gemischten Mörtelmasse gefüllten Aufnahmebohrung gemäss dem Oberbegriff des Patentanspruchs 1.

Neben den klassischen Befestigungstechniken, bei denen Befestigungspunkte mit Hilfe von in einem Bohrloch kraft- und/oder formschlüssig verankerten Spreizdübeln oder Hinterschnittsystemen erstellt werden, sind aus dem Stand der Technik auch chemische Befestigungstechniken bekannt, bei denen eine Ankerstange in eine mit Mörtelmasse gefüllte Aufnahmebohrung eingesetzt wird und nach dem Aushärten der Mörtelmasse fixiert ist. Derartige Verbundankersysteme weisen den Vorteil auf, dass sie weitgehend spreizdruckfrei sind und demnach geringe Achs- und Randabstände erlauben. Für Schwerlastbefestigungen sind Verbundankersysteme bekannt, bei denen eine mehrkomponentige organische und/oder anorganische Mörtelmasse in eine vorbereitete Aufnahmebohrung eingefüllt wird, wobei die Komponenten der Mörtelmasse zunächst noch in Glas- oder Kunststoffgebinden getrennt voneinander vorliegen. Eine Ankerstange, wie sie beispielsweise aus der EP-B-0 356 425 bekannt ist, wird um ihre Längsachse rotierend in die Aufnahmebohrung eingetrieben. Die eingebrachte Ankerstange zerstört die Gebinde, in denen die Komponenten der Mörtelmasse untergebracht sind. Durch die Rotation der Ankerstange wird die Mörtelmasse mehr oder weniger innig durchmischt und die aufgebrochenen Gebinde werden weiter zerkleinert. Die erzielbaren Lastwerte der Befestigung hängen von der guten Durchmischung der Komponenten ab. Daher sind in der Vergangenheit eine Vielzahl von Geometrien für die Ankerstange vorgeschlagen worden, die eine·gute Durchmischung der Komponenten der Mörtelmasse gewährleisten und die Gebindeteile ausreichend zerkleinern sollen, ohne die Mörtelmasse durch Überhitzung zu inaktivieren. Bei der Lagerung und bei der Handhabung der Mörtelgebinde, insbesondere von in Glasgebinden untergebrachten Mörtelmassen, muss relativ grosse Sorgfalt gewahrt werden, damit die Gebinde nicht zerstört werden.

Es sind auch Verbundankersysteme bekannt, bei denen eine Mörtelmasse vorgemischt und in eine vorbereitete Aufnahmebohrung eingebracht wird. Derartige Verbundankersysteme, die beispielsweise auch von der Anmelderin vertrieben werden, werden vor allem für Befestigungen in Ziegelmauerwerk, insbesondere in Hohlkammerziegein, eingesetzt. Die üblicherweise zwei Reaktivkomponenten umfassende Mörtelmasse wird mittels eines Auspressgeräts aus den Einzelgebinden für die Reaktivkomponenten ausgepresst, in einer der Ausbringöffnung des Auspressgeräts vorgelagerten Mischereinrichtung gemischt und in eine im Ziegelmauerwerk vorbereitete Aufnahmebohrung injiziert. Zur besseren Verteilung der bereits vorgemischten Mörtelmasse und um zu verhindern, dass die Mörtelmasse in eine Kammer des mit der Bohrung versehenen Ziegels abfliesst, wird die Aufnahmebohrung zuvor meist mit einer mit Durchbrüchen versehenen Hülse bestückt. Um eine vollständige Verfüllung der mit der Hülse versehenen Aufnahmebohrung zu gewährleisten, muss die Mörtelmasse in einem vorgeschriebenen Vorgang vom Bohrlochtiefsten aus zur Bohrlochmündung injiziert werden. Danach wird eine Ankerstange in die mit der vorgemischten Mörtelmasse gefüllte Bohrung eingesetzt. Nach dem Aushärten der Mörtelmasse ist die Gewindestange in der Aufnahmebohrung fixiert. Die Lastwerte, die bei dieser bekannten Befestigungstechnik in Ziegelmauerwerk erzielbar sind, hängen im wesentlichen von der Festigkeit des Ziegels ab.

Bei Befestigungen in Vollmaterial, beispielsweise in Beton, sind die erzielbaren Befestigungswerte abgesehen von der guten Durchmischung der Reaktivkomponenten der Mörtelmasse auch vom Umfang abhängig, in dem die Aufnahmebohrung mit der Mörtelmasse gefüllt ist. Die Befüllung der Aufnahmebohrung ist bei in Glas- oder Kunststoffgebinden getrennt untergebrachten und erst in der Aufnahmebohrung gemischten Mörtelmassen verhältnismässig leicht kontrollierbar. Die Viskosität der Mörtelkomponenten ist im allgemeinen relativ niedrig. Dies führt dazu, dass die aus dem Gebinde befreiten Mörtelkomponenten, der Schwerkraft gehorchend, zum Bohrlochtiefsten der meist mehr oder weniger vertikal verlaufenden Aufnahmebohrung. fliessen. Bei horizontal verlaufenden oder aufwärts geneigten Aufnahmebohrungen oder bei der Überkopfmontage bereitet die geringe Viskosität der Mörtelkomponenten aber grosse Schwierigkeiten, da die Mörtelmasse aus der Aufnahmebohrung fliesst.

Die unmittelbar vor der Injektion ausserhalb der Aufnahmebohrung gemischten Mörtelmassen weisen eine höhere Viskosität auf. Dadurch eignen sich sich auch für die Befüllung von horizontal verlaufenden oder aufwärts geneigten Aufnahmebohrungen oder sogar für eine Überkopfmontage. Die höhere Viskosität kann sich aber nachteilig für die Befüllung der Aufnahmebohrung erweisen. Wird die vorgemischte Mörtelmasse nicht vorschriftgemäss, beginnend vom Bohrlochtiefsten zur Bohrlochmündung, in die Aufnahmebohrung injiziert, kann es vorkommen, dass das Bohrloch nicht ausreichend mit Mörtelmasse gefüllt ist. Insbesondere im Bereich des Bohrlochtiefsten kann der Verankerungsbereich der eingesetzten Ankerstange nur unzureichend in die Mörtelmasse eingebettet sein, was sich negativ auf die erzielbaren Lastwerte auswirken kann.

Aufgabe der vorliegenden Erfindung ist es daher, eine Ankerstange für eine mit Mörtelmasse gefüllte Aufnahmebohrung zu schaffen, die gewährleistet, dass die Aufnahmebohrung auch im Bohrlochtiefsten ausreichend mit Mörtelmasse gefüllt ist. Die Ankerstangengeometrie soll derart beschaffen sein, dass ihr Verankerungsbereich im eingesetzten Zustand möglichst vollständig in die Mörtelmasse eingebettet ist. Die Ankerstange soll in Verbindung mit Mörtelmassen einsetzbar sein, deren Reaktivkomponenten unmittelbar vor der Injektion, bereits ausserhalb der Aufnahmebohrung gemischt werden. Die Gefahr einer Inaktivierung der in der Aufnahmebohrung befindlichen Mörtelmasse durch Überhitzung soll beseitigt werden.

Die Lösung dieser teils widersprüchlichen Aufgaben besteht in einer Ankerstange, welche die im kennzeichnenden Abschnitt des Patentanspruchs 1 angeführten Merkmale aufweist. Gemäss der Erfindung wird eine Ankerstange für eine mit Mörtelmasse gefüllte Aufnahmebohrung geschaffen, die einen Schaft mit einem Anschlussbereich und einem Verankerungsbereich mit mehreren axial hintereinander angeordneten, konusartigen Erweiterungen besitzt, deren Durchmesser in Setzrichtung zunimmt. Die konusartigen Erweiterungen weisen radial am weitesten von der Längsachse beabstandete Umfangsabschnitte auf, deren Radius etwa 0,1 mm bis etwa 1,5 mm kleiner ist als der für den Verankerungsbereich erforderliche halbe Nennbohrdurchmesser und deren Erstreckung in Umfangsrichtung in Summe jeweils bis zu 300°, vorzugsweise zwischen etwa 10° und etwa 90°, beträgt.

Durch die erfindungsgemässe geometrische Ausbildung des Verankerungsbereichs wird beim Einschieben der Ankerstange in die Aufnahmebohrung die Mörtelmasse zunächst in Richtung des Bohrlochtiefsten verdrängt und verdichtet. Erst wenn die Mörtelmasse den Bohrlochgrund erreicht hat, kann sich ein ausreichend grosser Gegendruck aufbauen, der dafür sorgt, dass die Mörtelmasse die radial am weitesten von der Längsachse der Ankerstange beabstandeten Umfangsabschnitte der konusförmigen Erweiterungen überwindet und nach rückwärts verdrängt wird. Auf diese Weise kann auch nach einem nur unvollständigen Verfüllen der Aufnahmebohrung die bereits vorgemischte Mörtelmasse über die gesamte Tiefe der Aufnahmebohrung verteilt und insbesondere in das Bohrlochtiefste eingebracht werden. Überschussmörtel kann über die Mündung der Aufnahmebohrung austreten. Auf diese Weise ist sichergestellt, dass die Ankerstange über die gesamte Länge ihres Verankerungsbereichs in die Mörtelmasse eingebettet ist. Die Abmessungen der Ankerstange im Verankerungsbereich sind dabei derart bemessen, dass zwischen der Wandung der Aufnahmebohrung und den konusförmigen Erweiterungen ein ausreichend grosser Querschnitt erhalten bleibt, damit das Einstecken der Ankerstange noch ermöglicht ist und ein Abfiltrieren von in der Mörtelmasse enthaltenen Füllstoffen verhindert wird.

Es erweist sich von Vorteil, wenn eine oder mehrere der konusartigen Erweiterungen an ihrem von der Längsachse radial am weitesten beabstandeten Umfangsabschnitt mit Aussparungen, vorzugsweise einer Längsrändelung, versehen sind. Dadurch kann der zwischen der Wandung der Aufnahmebohrung und den konusförmigen Erweiterungen verbleibende Querschnitt entsprechend der Fliessfähigkeit der Mörtelmasse zu kleineren Werten verringert werden, ohne dass es zu einer Sedimentation der Mörtelmasse kommt oder die für das Einstecken der Ankerstange in die mit der vorgemischten Mörtelmasse verfüllte Aufnahmebohrung erforderliche Kraft übermässig ansteigt.

Für die anfängliche Verdichtung der Mörtelmasse ist es zweckmässig, wenn die Aussparungen an den Umfangsabschnitten von zwei axial aufeinanderfolgenden konusartigen Erweiterungen in Umfangsrichtung zueinander versetzt angeordnet sind. Zusätzlich wird auf diese Weise auch die weitere Durchmischung der Mörtelmasse begünstigt, was sich vorteilhaft auf die Aushärtereaktion auswirkt.

In einer Variante der erfindungsgemässen Ankerstange sind die konusartigen Erweiterungen mit einseitigen Abflachungen versehen, die vorzugsweise achsparallel verlaufen. Die Abflachungen sind derart vorgesehen, dass der radial am weitesten von der Achse beabstandete Umfangsabschnitt an der Abflachung einen radialen Mindestabstand aufweist, der zumindest 30% des radialen Abstands des nicht abgeflachten Umfangsabschnitts beträgt. Durch die gewählte Geometrie der Ankerstange im Verankerungsbereich wird beim Einschieben der Ankerstange in die mit der Mörtelmasse gefülle Aufnahmebohrung die gewünschte anfängliche Verdrängung in das Bohrlochtiefste erreicht. Danach kann die Mörtelmasse zurückströmen, ohne dass es zu einer Sedimentation der Mörtelmasse kommt oder der Widerstand gegen das Einbringen der Ankerstange übermässig ansteigt. Die Massnahme, an den konusförmigen Erweiterungen im Verankerungsbereich Abflachungen anzubringen, ist technisch relativ einfach und kostengünstig durchzuführen.

Vorzugsweise sind die Abflachungen an axial hintereinander angeordneten konusartigen Erweiterungen in Umfangsrichtung zueinander zwischen etwa 45° und etwa 180° versetzt angeordnet. Dadurch werden beim Einbringen der Ankerstange in die Aufnahmebohrung in der Mörtelmasse turbulente Strömungen verursacht, die eine weitere, noch bessere Durchmischung der Reaktivkomponenten der Mörtelmasse begünstigt.

Indem an der Ankerstange, beginnend vom freien Vorderende des Verankerungsereichs den konusartigen Erweiterungen jeweils gegenkonische Bereiche zugeordnet sind, deren Durchmesser in Setzrichtung abnimmt, wird die Mörtelmasse zu den Aussparungen bzw. Abflachungen hingeleitet. Dadurch kann der Widerstand gegen das Einschieben der Ankerstange in die mit der Mörtelmasse verfüllte Aufnahmebohrung relativ klein gehalten werden.

In einer weiteren Variante der Erfindung sind in axialer Richtung aufeinander folgende konusartige Erweiterungen zueinander und zur Längsachse in radialer Richtung versetzt angeordnet. Die Versetzung der axial hintereinander angeordneten konusartigen Erweiterungen ist eine Alternative zu den einseitigen Abflachungen und hat den gleichen Effekt bezüglich der Verteilung der Mörtelmasse über die gesamte Bohrlochtiefe.

Ein besonders gutes Verhältnis des Verteileffekts der Mörtelmasse zum Widerstand gegen das Einbringen der Ankerstange in die mit Mörtelmasse verfüllte Aufnahmebohrung ergibt sich, wenn der radiale Versatz gegenüber der Längsachse etwa 0,5 mm bis etwa 2,5 mm beträgt.

Indem die radial versetzten, aufeinanderfolgenden, konischen Erweiterungen in Umfangsrichtung einen Versatz aufweisen, der zwischen etwa 45° und etwa 180° beträgt, werden innerhalb der verdrängten und entlang des Verankerungsbereichs der Ankerstange nach rückwärts strömenden Mörtelmasse Turbulenzen erzeugt, die eine weitere Durchmischung der Reaktivkomponenten der Mörtelmasse begünstigen.

Es erweist sich von Vorteil, wenn der Verankerungsbereich eine gegenüber der Mörtelmasse nichthaftende Oberfläche aufweist. Vorzugsweise ist der Verankerungsbereich dazu mit einer Ummantelung bzw. einer Beschichtung versehen, die gegenüber der Mörtelmasse nichthaftend ist. Dadurch kann die Ankerstange bei Belastung in einem sich öffnenden Riss eine Bewegung in Achsrichtung ausführen. Die ausgehärteten Mörtelschalen werden dabei gegen die Bohrlochwand gepresst und der Formschluss zwischen der Bohrlochwand und den Mörtelschalen wird wiederhergestellt. Durch diese Fähigkeit nachzuspreizen ist eine Risstauglichkeit der Ankerstange gegeben, und sie ist in der Zugzone des Betons einsetztbar.

Im folgenden wird die Erfindung anhand von Ausführungsbeispielen, die in den Figuren schematisch dargestellt sind, näher erläutert. Es zeigen jeweils in Seitenansicht:
- Fig. 1: ein erstes Ausführungsbeispiel der erfindungsgemässen Ankerstange;
- Fig. 2: ein zweites Ausführungsbeispiel der Ankerstange; und
- Fig. 3: ein drittes Ausführungsbeispiel der Ankerstange.

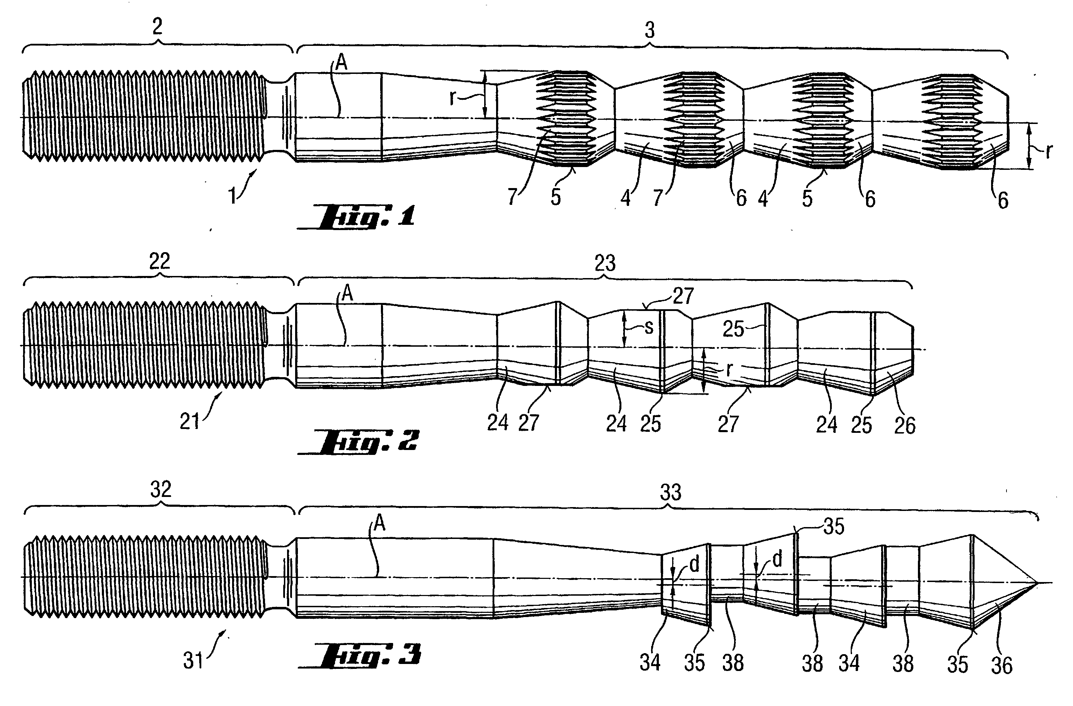

Das in Fig. 1 dargestellte Ausführungsbeispiel der erfindungsgemässen Ankerstange trägt gesamthaft das Bezugszeichen 1. Die Ankerstange 1 besitzt einen Anschlussbereich 2, an den in Setzrichtung ein Verankerungsbereich 3 anschliesst, der in der Gebrauchstellung innerhalb einer mit einer Mörtelmasse gefüllten Aufnahmebohrung angeordnet ist. Der Verankerungsbereich 3 weist mehrere, beispielsweise vier, axial hintereinander angeordnete, konusartige- Erweiterungen 4 auf. Die konusartigen Erweiterungen 4 erweitern sich in Setzrichtung bis zu einem Umfangsabschnitt 5, der radial am weitesten von der Längsachse A der Ankerstange 1 beabstandet ist. Der Radius r des Umfangsabschnitts 5 ist etwa 0,1 mm bis etwa 1,5 mm kleiner als der zur Aufnahme des Verankerungsbereichs 3 erforderliche halbe Nennbohrdurchmesser der Ankerstange 1.

Im Bereich der Umfangsabschnitte 5 sind die konusartigen Erweiterungen 4 mit Aussparungen 7 versehen, die, gemäss der Darstellung, beispielsweise durch eine Längsrändelung gebildet sein können. Anstelle einer Längsrändelung können die Aussparungen 7 an den Umfangsabschnitten 5 auch als Grobverzahnung oder dergleichen ausgebildet sein. Als Folge der Aussparungen 7 sind die radial am weitesten von der Längsachse A beabstandeten Umfangsabschnitte 5 in Umfangsrichtung segmentiert. Die Summe der in Umfangsrichtung verlaufenden Umfangsabschnitte 5 einer konusartigen Erweiterung 4 erstreckt sich über einen Winkel, der maximal 300° beträgt. Vorzugsweise erstrecken sich alle aneinandergereihten Umfangsabschnitte 5 einer konusartigen Erweiterung 4 in Umfangsrichtung über einen Winkelbereich von etwa 10° bis etwa 90°.

Beginnend vom freien Vorderende des Verankerungsbereichs 3 der Ankerstange 1, sind den konusartigen Erweiterungen 4 jeweils Gegenkonen 6 zugeordnet, deren Durchmesser in Setzrichtung abnehmen. Die Gegenkonen 6 schliessen jeweils an die radial am weitesten von der Längsachse A der Ankerstange 1 beabstandeten Umfangsabschnitte 5 an.

Die in Fig. 2 dargestellte Ankerstange trägt das Bezugszeichen 21. Ihr grundsätzlicher Aufbau im Verankerungsbereich 23 weist grosse Ähnlichkeit zu dem Aufbau des Verankerungsbereichs der in Fig. 1 dargestellten Ankerstange auf. Entsprechend tragen korrespondierende Merkmale Bezugszeichen, die um 20 erhöht sind. Der wesentliche Unterschied besteht darin, dass die konusartigen Erweiterungen 24 einseitig mit Abflachungen 27 versehen sind. Der Abflachungen 27 verlaufen in axialer Richtung vorzugsweise parallel zu der Längsachse A der Ankerstange 21. Die Anordung der Abflachungen 27 ist derart gewählt, dass der radial am weitesten von der Längsachse A beabstandete Umfangsabschnitt 25 an der Abflachung 27 einen radialen Mindestabstand s aufweist, der zumindest 30% des radialen Abstands r des nicht abgeflachten Umfangsabschnitts 25 beträgt. Die Abflachungen 27 von axial aufeinanderfolgenden konusartigen Erweiterungen 24 sind in Umfangsrichtung zueinander versetzt. Gemäss dem dargestellten Ausführungsbeispiels beträgt der Versatz in Umfangsrichtung etwa 180°. Die konusartigen Erweiterungen 24 können jedoch auch einen davon abweichenden Versatz der Abflachungen 27 aufweisen, der vorzugsweise zwischen etwa 45° und etwa 180° beträgt. Beginnend vom freien Vorderende des Verankerungsbereichs 23 der Ankerstange 21, sind den konusartigen Erweiterungen 24 wiederum jeweils Gegenkonen 26 zugeordnet, deren Durchmesser in Setzrichtung abnehmen. Die Gegenkonen 26 schliessen jeweils an die radial am weitesten von der Längsachse A der Ankerstange 21 beabstandeten Umfangsabschnitte 25 an.

In Fig. 3 ist ein weiteres Ausführungsbeispiel der erfindungsgemässen Ankerstange dargestellt und gesamthaft mit dem Bezugszeichen 31 versehen. Der Anschlussbereich der Ankerstange 31 trägt das Bezugszeichen 32; der in Setzrichtung anschliessende Verankerungsbereich ist gesamthaft mit 33 bezeichnet. Im Verankerungsbereich 33 sind mehrere konusartige Erweiterungen 34 vorgesehen, die relativ zueinander und in Bezug auf die Längsachse A der Ankerstange 31 in radialer Richtung versetzt angeordnet sind. Der radiale Versatz d gegenüber der Längsachse A beträgt etwa 0,5 mm bis etwa 2,5 mm. Die radial versetzten, konusartigen Erweiterungen 34 sind auch in Umfangsrichtung zueinander versetzt. Vorzugsweise beträgt der Versatz axial aufeinanderfolgender, konusartiger Erweiterungen 34 zwischen etwa 45° und 180°. Im dargestellten Ausführungsbeispiel weisen die konusartigen Erweiterungen 34 einen Versatz in Umfangsrichtung auf, der etwa 180° beträgt. Die radial und in Umfangsrichtung zueinander versetzten, konusartigen Erweiterungen 34 sind durch im wesentlichen zylindrische Schaftabschnitte 38 voneinander getrennt, die an die radial am weitesten von der Längsachse A beabstandeten Umfangsabschnitte 35 anschliessen. Die zylindrischen Schaftabschnitte 38 können ebenfalls gegenüber der Längsachse A einen radialen Versatz aufweisen. Beispielsweise kann, wie dargestellt, die Zylinderfläche eines zylindrischen Schaftabschnitts jeweils den gleichen grössten radialen Abstand von der Längsachse A aufweisen, wie der Umfangsabschnitt 35 der unmittelbar anschliessenden konusartige Erweiterung 34. An den Umfangsabschnitt 35 der vordersten konusartigen Erweiterung 34, kann, wie dargestellt, ein gegenkonischer Bereich 36 anschliessen.

Damit die Ankerstangen 1, 21, 31 in einem sich öffnenden Riss durch die Aufnahmebohrung eine nachspreizende Wirkung entfalten können, weisen sie in ihren Verankerungsbereichen 3, 23, 33 eine gegenüber der Mörtelmasse nichthaftende Oberfläche auf. Vorzugsweise sind sie dazu im Verankerungsbereich 3, 23, 33 mit einer nichthaftenden Beschichtung oder einer Ummantelung versehen.

## Patentansprüche

1. Ankerstange für eine mit Mörtelmasse gefüllte Aufnahmebohrung mit einem Schaft, der einen Anschlussbereich (2; 22; 32) und einen Verankerungsbereich (3; 23; 33) mit mehreren axial hintereinander angeordneten, konusartigen Erweiterungen (4; 24; 34) besitzt, deren Durchmesser in Setzrichtung zunimmt, **dadurch gekennzeichnet, dass** die konusartigen Erweiterungen (4; 24; 34) jeweils mit einem, radial am weitesten von der Längsachse beabstandeten und durch Aussparungen (7; 27) segmentierten, Umfangsabschnitt (5; 25; 35) versehen sind, dessen Erstreckung in Umfangsrichtung in Summe bis zu 300° beträgt und dessen Radius (r) etwa 0.1 bis 1,5 mm kleiner ist, als der für den Verankerungsbereich (3; 23; 33) erforderliche halbe Nenndurchmesser beträgt.

2. Ankerstange nach Anspruch 1, **dadurch gekennzeichnet, dass** eine oder mehrere der konusartigen Erweiterungen (4) an ihrem von der Längsachse (A) radial am weitesten beabstandeten Umfangsabschnitt (5) mit Aussparungen (7), vorzugsweise einer Längsrändelung, versehen sind.

3. Ankerstange nach Anspruch 2, **dadurch gekennzeichnet, dass** die Aussparungen (7) an den Umfangsabschnitten (5) von zwei axial aufeinanderfolgenden konusartigen Erweiterungen (4) in Umfangsrichtung zueinander versetzt angeordnet sind.

4. Ankerstange nach Anspruch 1, **dadurch gekennzeichnet, dass** die konusartigen Erweiterungen (24) mit einseitigen Abflachungen (27) versehen sind, die achsparallel verlaufen, wobei der radial am weitesten von der Längsachse (A) beabstandete Umfangsabschnitt (25) an der Abflachung (27) einen radialen Mindestabstand (s) aufweist, der zumindest 30% des radialen Abstands (r) des nicht abgeflachten Umfangsabschnitts (25) beträgt.

5. Ankerstange nach Anspruch 4, **dadurch gekennzeichnet, dass** die Abflachungen (27) an axial hintereinander angeordneten konusartigen Erweiterungen (24) in Umfangsrichtung zueinander um vorzugsweise zwischen etwa 45° und etwa 180° versetzt angeordnet sind.

6. Ankerstange nach einem der vorangehenden Ansprüche, **dadurch gekennzeichnet, dass** beginnend vom freien Vorderende des Verankerungsbereichs (3; 23) den konusartigen Erweiterungen (4; 24) jeweils gegenkonische Bereiche (6; 26) zugeordnet sind, deren Durchmesser in Setzrichtung abnimmt.

7. Ankerstange nach Anspruch 1, **dadurch gekennzeichnet, dass** in axialer Richtung aufeinander folgende konusartige Erweiterungen (34) zueinander und zur Längsachse (A) in radialer Richtung versetzt angeordnet sind.

8. Ankerstange nach Anspruch 7, **dadurch gekennzeichnet, dass** der radiale Versatz (d) gegenüber der Längsachse (A) der Ankerstange (31) etwa 0,5 mm bis etwa 2,5 mm beträgt.

9. Ankerstange nach Anspruch 7 oder 8, **dadurch gekennzeichnet, dass** die radial versetzten, aufeinanderfolgenden, konischen Erweiterungen (34) in Umfangsrichtung einen Versatz aufweisen, der zwischen etwa 45° und etwa 180° beträgt.

10. Ankerstange nach einem der vorangehenden Ansprüche, **dadurch gekennzeichnet, dass** der Verankerungsbereich eine gegenüber der Mörtelmasse nichthaftende Beschichtung aufweist.

## Claims

1. Anchoring bar for a receiving bore which is filled with a mortar substance, comprising a shaft with a connecting area (2; 22; 32) and an anchoring area (3; 23; 33) with a plurality of conical expansions (4; 24; 34) which are arranged axially one behind the other and the diameter of which increases in the setting direction, **characterised in that** the conical expansions (4; 24; 34) are provided with a respective peripheral section (5; 25; 35) which is radially farthest away from the longitudinal axis and segmented by cutouts (7; 27) the extent of which in the peripheral direction equals in sum up to 300° and the radius (r) of which is smaller by between approximately 0.1 and 1.5 mm than the half nominal diameter required for the anchoring area (3; 23; 33).

2. Anchoring bar according to Claim 1, **characterised in that** one or more of the conical expansions (4) are at their peripheral section (5) which a radially the farthest away from the longitudinal axis (A) provided with cutouts (7), preferably a longitudinal knurl.

3. Anchoring bar according to Claim 2, **characterised in that** the cutouts (7) are on the peripheral sections (5) arranged to be offset relative to each other in the peripheral direction by two axially successive conical expansions (4).

4. Anchoring bar according to Claim 1, **characterised in that** the conical expansions (24) are provided with singlesided flattenings (27) which extend axis-parallel, and the peripheral section (25) radially farthest away from the longitudinal axis (A) has at the flattening (27) a radial minimum distance (s) of at least 30% of the radial distance (r) of the peripheral section (25) which is not flattened off.

5. Anchoring bar according to Claim 4, **characterised in that** the flattenings (27) on conical expansions (24) arranged axially one behind the other are arranged offset in the peripheral direction by preferably between approximately 45° and approximately 180°.

6. Anchoring bar according to one of the above claims, **characterised in that,** commencing from the free front end of the anchoring area (3; 23), the conical expansions (4; 24) are associated with respective counter-conical areas (6; 26) the diameter of which decreases in the setting direction.

7. Anchoring bar according to Claim 1, **characterised in that** conical expansions (34) following each other in the axial direction are arranged to be offset relative to each other and to the longitudinal axis (A) in the radial direction.

8. Anchoring bar according to Claim 7, **characterised in that** the radial offset (d) relative to the longitudinal axis (A) of the anchoring bar (31) lies between approximately 0.5 mm and approximately 2.5 mm.

9. Anchoring bar according to Claim 7 or 8, **characterised in that** the radially offset successive conical expansions (34) have an offset in the peripheral direction of between approximately 45° and approximately 180°.

10. Anchoring bar according to one of the above claims, **characterised in that** the anchoring area comprises a coating which is non-adhering to the mortar substance.

## Revendications

1. Tige d'ancrage pour un trou récepteur rempli d'une masse de mortier, comprenant une tige qui possède une zone de raccordement (2 ; 22 ; 32) et une zone d'ancrage (3 ; 23 ; 33) avec plusieurs parties élargies en forme de cônes (4 ; 24 ; 34) qui sont disposées les unes derrière les autres dans le sens axial et dont le diamètre augmente dans la direction de scellement, **caractérisée en ce que** les parties élargies en forme de cônes (4 ; 24 ; 34) sont chacune pourvues d'une portion périphérique (5 ; 25 ; 35) qui est la plus éloignée radialement de l'axe longitudinal et est segmentée par des évidements (7 ; 27), dont l'extension cumulée dans la direction circonférentielle atteint jusqu'à 300° et dont le rayon (r) est inférieur d'environ 0,1 à 1,5 mm à la moitié du diamètre nominal requis pour la zone d'ancrage (3 ; 23 ; 33).

2. Tige d'ancrage selon la revendication 1, **caractérisée en ce que**, dans leur portion périphérique (5) la plus éloignée radialement de l'axe longitudinal (A), une ou plusieurs des parties élargies en forme de cônes (4) sont pourvues d'évidements (7), de préférence d'un moletage longitudinal.

3. Tige d'ancrage selon la revendication 2, **caractérisée en ce que**, dans les portions périphériques (5) de deux parties élargies en forme de cônes (4) qui se succèdent axialement, les évidements (7) sont disposés en décalage mutuel dans la direction circonférentielle.

4. Tige d'ancrage selon la revendication 1, **caractérisée en ce que** les parties élargies en forme de cônes (24) sont pourvues, d'un seul côté, de parties aplaties (27) dont les axes sont parallèles, la portion périphérique (25) la plus éloignée de l'axe longitudinal (A) présentant, au niveau de la partie aplatie (27), une distance radiale minimale (s) qui correspond au moins à 30 % de la distance radiale (r) de la portion périphérique non aplatie (25).

5. Tige d'ancrage selon la revendication 4, **caractérisée en ce que** les parties aplaties (27) ménagées dans des parties élargies en forme de cônes (24) disposées les unes derrière les autres dans le sens axial sont disposées avec un décalage mutuel compris, de préférence, entre environ 45° et environ 180° dans la direction circonférentielle.

6. Tige d'ancrage selon une des revendications précédentes, **caractérisée en ce qu'**à partir de l'extrémité avant libre de la zone d'ancrage (3 ; 23), des zones à conicité inverse (6 ; 26), dont le diamètre décroît dans la direction de scellement, sont associées à chacune des parties élargies en forme de cônes (4 ; 24).

7. Tige d'ancrage selon la revendication 1, **caractérisée en ce que** des parties élargies en forme de cônes (34) qui se succèdent dans la direction axiale sont disposées avec, dans la direction radiale, un décalage les unes par rapport aux autres et par rapport à l'axe longitudinal (A).

8. Tige d'ancrage selon la revendication 7, **caractérisée en ce que** le déport radial (d) par rapport à l'axe longitudinal (A) de la tige d'ancrage (31) correspond à environ 0,5 mm à environ 2,5 mm.

9. Tige d'ancrage selon la revendication 7 ou 8, **caractérisée en ce que** les parties élargies coniques successives décalées radialement (34) présentent, dans la direction circonférentielle, un déport qui est compris entre environ 45° et environ 180°.

10. Tige d'ancrage selon une des revendications précédentes, **caractérisée en ce que** la zone d'ancrage comporte un revêtement non adhérent par rapport à la masse de mortier.
